# EUROPEAN PATENT SPECIFICATION

(11) **EP 2 753 199 B1**
(45) Date of publication and mention of the grant of the patent: **10.05.2023**
(21) Application number: 12768751.5
(22) Date of filing: 06.09.2012
(51) Int. Cl.: A24D 3/04, A24D 3/06, A24D 1/00

(54) **SMOKING ARTICLE FILTER INCLUDING POLYMERIC INSERT**
RAUCHARTIKELFILTER MIT POLYMEREINSATZ
FILTRE D'ARTICLE À FUMER INCLUANT UN INSERT POLYMÈRE

(30) Priority: 09.09.2011 EP 11250778
(43) Date of publication of application: 16.07.2014
(73) Proprietor: Philip Morris Products S.A., 2000 Neuchâtel (CH)
(72) Inventor: RYTER, Blaise, CH-1305 Penthalaz (CH)
(74) Representative: Millburn, Julie Elizabeth
(86) International application number: PCT/EP2012/067442
(87) International publication number: WO 2013/034652

(56) References cited:
- EP-A1- 2 253 231
- EP-A1- 2 289 357
- WO-A1-98/49912
- WO-A2-2009/016513
- WO-A2-2009/143338
- US-A- 5 497 793
- US-A1- 2006 264 130
- US-A1- 2009 288 669
- US-A1- 2011 083 675

## Description

The present invention relates to a smoking article including a filter comprising a polymeric insert formed of a water soluble polymeric material and to a method for forming a filter for a smoking article incorporating such a polymeric insert.

Filter cigarettes typically comprise a wrapped rod of tobacco cut filler and a cylindrical filter aligned in end-to-end relationship with the wrapped tobacco rod, with the filter attached to the tobacco rod by tipping paper. In conventional filter cigarettes, the filter may consist of a plug of cellulose acetate tow wrapped in porous plug wrap. Filters incorporating one or more structural inserts are also known. For example, it is known to provide filters including one or more flow restriction elements for increasing the resistance to draw (RTD) of the smoking article.

It has been previously proposed to produce filters for cigarettes using biodegradable materials so that the cigarette butt that remains after smoking can be more readily degraded after its disposal. For example, it has been proposed to form fibrous filter segments with fibres of a biodegradable thermoplastic material, either alone or in combination with conventional cellulose acetate fibres.

EP 2 253 231 A1 discloses a smoking article 10 comprising a cylindrical tobacco rod 12 and a filter 14. The filter 14 is attached to the tobacco rod 12 by a band of tipping paper 16, which circumscribes the filter 14 and an adjacent portion of the tobacco rod 12, which comprises a charge of tobacco cut filler 18 circumscribed by a high basis weight, low permeability, paper wrapper 20. The filter 14 comprises a first filter segment 22 adjacent to and abutting the tobacco rod 12, a second filter segment 24 at the mouth end of the smoking article 10 and a one-piece, injection molded, flow restriction element 26 disposed between the first filter segment 22 and the second filter segment 24. The first and second filter elements 22, 24 and the flow restriction element 26 are circumscribed by a band of plug wrap 28. The flow restriction element 26, which is preferably formed of biodegradable polymeric material, includes a first upstream integral tubular portion 30 adjacent to and abutting the first filter segment 22, a second downstream integral tubular portion 32 of substantially the same external diameter as the first tubular portion 30, which is adjacent to and abuts the second filter segment 24, and a third central integral tubular portion 34 located between and of reduced external diameter compared to the first and second tubular portions 30, 32. The plug wrap 28 is affixed to the circumferential outer surfaces of the first filter element 22 and the first tubular portion 30 of the flow restriction element 26 by an adhesive so as to form a substantially air-tight at the outer surface of the first tubular portion 30 of the flow restriction element 26. The flow restriction element 26 further comprises a transverse barrier 36 with a single central orifice 38 of reduced diameter provided therein. The transverse barrier 36 is disposed between a first upstream cavity 40, which is at least partially defined by the inner peripheries of the first and third tubular portions 30, 34 of the flow restriction element 26, and a second downstream cavity 42, which is at least partially defined by the inner periphery of the second tubular portion 32 of the flow restriction element. A plurality of substantially equally circumferentially spaced apart openings 46 are provided in the upstream transverse end surface of the second tubular portion 32 that extends radially outward around the third tubular portion 34. These openings 46 form a communication path between the one or more circumferential rows of perforations 44 provided in the tipping paper 16 and plug wrap 28 and the second cavity 42.

It would be desirable to provide an insert for the filter of a smoking article that can be readily broken down or degraded in order to facilitate the disintegration and degradation of the filter as a whole after the disposal of the filter. In particular, it would be desirable to provide such an insert that can be readily and quickly broken down in the presence of liquid water at a wide variety of temperatures. It would be desirable if such an insert could be readily manufactured and incorporated into smoking article filters using existing apparatus and methods.

According to the invention there is provided a smoking article including a filter comprising a polymeric insert having walls, the thickness of the walls being between 0.2 mm and 2.0 mm, the insert having a compressibility of less than 100 N *per* 1.5 mm and being formed of a water soluble polymeric material comprising one or more water soluble polymers, wherein the filter is circumscribed by a filter wrapper and wherein the filter wrapper is fused to the outer surface of the polymeric insert by means of the polymeric material forming the polymeric insert. Preferably, the compressibility is less than about 70 Newtons *per* 1.5 mm and more preferably less than about 40 Newtons *per* 1.5 mm. Preferably the compressibility is no less than about 5 N *per* 1.5 mm. In preferred embodiments of the invention, the polymeric insert is a structural element of the filter portion of a smoking article having a filter at one end.

The compressibility of the polymeric insert can be measured in a compression test in which the polymeric insert is placed on a substantially flat support surface and a force is applied in a downwards direction on one side of the insert using a head having a flat, 12 mm round surface moving at a speed of 100 mm *per* minute. Suitable apparatus for conducting such a test is the FMT-310 Force Tester of Alluris GmbH. The polymeric insert is conditioned for 24 hours at a temperature of 22 °C and a relative humidity of 55% before the compression test is carried out. The test is continued until the insert has been compressed 1.5 mm. The force (Newtons) at this point is the compressibility. If the test is unable to continue to 1.5 mm compression, the force can be normalized to 1.5 mm. In other words, if the maximum compressive force is 28 Newtons and the compression at this maximum compression is 1.4 mm, the reported value for compressibility will be 30 Newtons *per* 1.5 mm (28 Newtons divided by 1.4 multiplied by 1.5).

The smoking article of the invention includes a filter comprising the polymeric insert and a filter wrapper circumscribing the filter. The filter wrapper is welded to the outer surface of the polymeric insert by means of the polymeric material forming the polymeric insert. The filter wrapper may be a plug wrap.

Also according to the invention there is provided a method for forming a filter for a smoking article, the method comprising the steps of providing a water soluble polymeric insert having a compressibility of less than 100 N *per* 1.5 mm formed of a water soluble polymeric material comprising one or more water soluble polymers, providing a filter wrapper, wetting at least one of the polymeric insert and the filter wrapper through the application of water, and wrapping the filter wrapper around the filter and into contact with the polymeric insert wherein the applied water at least partially dissolves the polymeric material at the outer surface of the polymeric insert and wherein the dissolved polymeric material adheres the filter wrapper to the outer surface of the polymeric insert.

Preferably the compressibility is no less than about 5 N *per* 1.5 mm.

The filters of the present invention may advantageously be used in filter cigarettes and other smoking articles in which tobacco material is combusted to form smoke. The filters of the present invention may also be used in smoking articles in which tobacco material is heated to form an aerosol, rather than combusted. The filters of the present invention may also be used in smoking articles in which a nicotine-containing aerosol is generated from a tobacco material, tobacco extract, or other nicotine source, without combustion or heating.

As used herein, the term "smoke" is used to describe smoke produced by combustible smoking articles, such as filter cigarettes, and aerosols produced by non-combustible smoking articles, such as heated or non-heated smoking articles of the types described above.

The term "insert" refers to a solid, structural filter element that has a defined shape and structure depending upon the intended function of the insert. As described in more detail below, examples of types of inserts for use in the invention include hollow tube inserts and flow restriction inserts.

The inserts of the invention are formed of a "dissolvable" polymeric material formed of a water soluble polymer or a combination of water soluble polymers. The term "dissolvable" means that the polymeric material is capable of dissolving into a solution with water as a solvent. This is achieved through the use of one or more water soluble polymers to form the polymeric material. The rate of dissolution also typically depends on the features of the polymeric insert including but not limited to the type of water soluble polymer, the density of the polymeric material, and the shape and dimensions of the polymeric insert, in particular the surface area and the thickness.

In a first stage of the dissolution of the polymeric material in water, the structure of the polymeric insert is broken down so that the shape or structure of the insert disappears. This results in a shapeless mass of the material forming the polymeric insert, which has no visible structure or definition when viewed with the naked eye. Preferably, the polymeric insert comprises a dissolvable polymer and is shaped and configured such that the insert reaches at least this first stage of dissolution when the insert is placed in a closed container with water at 22 °C for 24 hours without agitation, wherein the amount of water present in the container is about eight times the weight of the polymeric insert. More preferably, the polymeric insert comprises a dissolvable polymer and is shaped and configured such that the insert reaches at least this first stage of dissolution when the insert is placed in a closed container with water at 22 °C for 24 hours without agitation, wherein the amount of water present in the container is about six times the weight of the polymeric insert, most preferably four times the weight of the polymeric insert.

In a second stage of the dissolution of the polymeric material in water, after the structure of the polymeric insert has fully broken down, the polymeric material forming the polymeric insert is fully dissolved in the water so that all of the polymeric material is in solution. There is no remaining visible polymeric material when the sample is viewed with the naked eye, although a residue of any insoluble components of the polymeric insert may remain, as discussed below.

Preferably, the polymeric insert comprises a dissolvable polymer and is shaped and configured such that the insert reaches this second stage of dissolution when the insert is placed in a closed container with water at 22 °C for 24 hours without agitation, wherein the amount of water present in the container is about 400 times the weight of the polymeric insert, more preferably about 200 times the weight of the polymeric insert and even more preferably about 100 times the weight of the polymeric insert.

The polymeric insert may be formed entirely of the dissolvable polymeric material, or the dissolvable polymeric material may be combined with other components to form the polymeric insert. For example, the insert may include inert components, such as inert filler materials. The other components forming the polymeric insert may be water soluble or water insoluble. Where the insert includes one or more components that are insoluble in water, these components will remain as a residue after the dissolution of the polymeric material under the test conditions described above.

The polymeric inserts of the present invention are formed of water soluble polymers that rapidly dissolve when the insert is brought into contact with liquid water, in particular water near room temperature (around 22 °C). The dissolvable polymeric material forming the polymeric insert will therefore readily dissolve, as described above, on contact with water that is present in the environment, such as rain water, drain or sewage water or natural water sources such as rivers or streams.

Where the polymeric insert is incorporated into a filter of a smoking article, the ability of the polymeric insert to structurally break down under such naturally occurring conditions advantageously increases the rate at which the filter as a whole can disintegrate or degrade when the filter has been discarded after smoking. The loss of structure of the polymeric insert as a result of the dissolution of the polymeric material will typically cause the filter to at least partially collapse or break apart so that water or gases can more readily penetrate through the remaining components of the filter. This facilitates the degradation of the filter as a whole, which may take place as a result of contact with water, oxygen, sunlight, bacteria or combinations thereof. In particular, the increased rate of disintegration of the discarded filter including the polymeric insert may advantageously increase the rate at which the filter biodegrades.

After a filter of the invention has been discarded, the rate of dissolution of the polymeric material forming the polymeric insert will typically depend upon conditions including but not limited to the volume of water in contact with the insert, the temperature of the water and any movement or agitation of the insert. In general, at temperatures above 22 °C the polymeric insert may dissolve in a shorter time than under the test conditions at 22 °C, as defined above.

Advantageously, the polymeric material including the water soluble polymers can readily be formed into a variety of defined shapes so that a variety of different types of inserts for smoking articles can be formed. The polymeric material can also advantageously be processed in order to provide a sufficient hardness and rigidity for the formation of structural inserts. Preferably, a polymeric material is selected that can be readily moulded, extruded or cast in order to form the insert, before being hardened by cooling, drying or curing. This provides flexibility in the production of the inserts and enables the formation of inserts with relatively complex shapes and structures, if desired. Preferably, the polymeric inserts of the present invention are formed by extrusion or injection moulding of the polymeric material in combination with any additional components.

Preferably, the polymeric insert of the present invention is formed as a single, one piece insert in order to make the processes of manufacturing the insert and placing the insert in a smoking article filter as efficient as possible. Alternatively, the polymeric insert may be formed of two or more connected insert portions.

Preferably, the outer surface of the one or more inserts provides the outer shape of the filter into which the polymeric insert is incorporated.

The polymeric insert may take a variety of different forms depending on the intended function of the insert within the smoking article filter. Preferably, the polymeric insert comprises one or more tubular portions defining one or more internal cavities. For example, in certain preferred embodiments, the polymeric insert is in the form of a tube. The internal space within the tube provides a cavity within the filter which may be left empty or may be at least partially filled with a material, such as a filtration material, a flavourant material or a sorbent material.

In alternative preferred embodiments, the polymeric insert is a flow restriction element for restricting the flow of mainstream smoke through the filter, thereby increasing the resistance to draw (RTD) of the filter. Preferably, the flow restriction element comprises at least one transverse barrier including one or more orifices providing restricted pathways for the smoke through the transverse barrier. The term "transverse" refers to a component that is positioned substantially perpendicular to the longitudinal direction of the filter into which the polymeric insert is incorporated.

Preferably, the flow restriction element additionally comprises one or more tubular portions on one side of the transverse barrier wherein the tubular portion provides an upstream or downstream cavity adjacent to the transverse barrier.

Particularly preferably, the flow restriction element comprises a tubular portion on both sides of the transverse barrier, providing upstream and downstream cavities adjacent to the transverse barrier. The tubular portions on either side of the transverse barrier may be of substantially the same size and shape to provide a flow restriction element having symmetry about the transverse barrier. Alternatively, the tubular portions on either side of the transverse barrier may have a different size or shape to each other to provide a flow restriction element that is asymmetric about the transverse barrier. For example, the tubular portions may have a different length, a different external diameter, a different internal diameter, a different wall thickness of any combination thereof.

In certain preferred embodiments, two integral tubular portions are provided on one side of the transverse barrier. Preferably, the first integral tubular portion adjacent to the transverse barrier has an external diameter that is reduced compared to that of the second integral tubular portion. This arrangement provides an annular channel around the outer surface of the insert, which is preferably used to provide ventilation to the insert. The two integral tubular portions may be provided upstream or downstream of the transverse barrier. A single tubular portion is preferably provided on the opposite side of the transverse barrier to the two integral tubular portions. In a particularly preferred embodiment, two integral tubular portions are provided downstream of the transverse barrier and a single tubular portion is provided upstream of the transverse barrier.

In other alternative embodiments, the polymeric insert is a container or canister adapted to contain a material to be incorporated into the filter. Preferably, the container or canister contains a flavourant material to be released into the mainstream smoke during smoking. The container or canister may have holes in one or both ends in order to let smoke travel through the insert to pick up the flavourant.

Alternatively or in addition to any flavourant contained within the polymeric insert, the polymeric insert may incorporate one of more flavourants that are released from the insert during smoking. For example, the insert may incorporate a flavourant that is released upon exposure to heat, moisture or both. The one or more flavourants may be incorporated within the polymeric material forming the polymeric insert, or the one or more flavourants may be applied to the surface of the insert.

Preferably, the walls of the polymeric insert have a thickness of less than about 2.0 mm, more preferably less than about 1.0 mm, and most preferably less than about 0.7 mm. Preferably, the walls of the polymeric insert have a thickness of up to about 2.0 mm, more preferably up to about 0.7 mm. In some embodiments, the wall thickness is preferably between about 0.2 mm and about 2.0 mm, more preferably between about 0.5 mm and about 0.7 mm. The thickness of the walls forming the inserts, including any transverse barriers or other structures of the inserts, may be measured in a longitudinal cross section of the insert.

It has been advantageously found that the rate of the dissolution of the polymeric material forming the polymeric insert and the break down of the structure of the polymer insert can be reduced through the reduction of the thickness of the walls of the polymeric insert.

Preferably, the polymeric insert is between about 10 mm and 20 mm in length, more preferably between about 12 mm and 14 mm in length. Where the polymeric insert includes one or more tubular portions, the length of each portion is preferably at least 3 mm, more preferably at least 4 mm. Preferably, the external diameter of the polymeric insert is between about 6 mm and 9 mm, more preferably between about 7 mm and 8.5 mm, most preferably between about 7.2 mm and 7.9 mm for a standard sized cigarette or between about 6.6 mm and about 7.6 mm for a reduced diameter cigarette.

The dissolvable polymeric material forming the polymeric insert of the present invention includes one or more water soluble polymers. Preferably, the water soluble polymers are water soluble thermoplastics which can be readily processed to form the polymeric inserts and also provide a sufficient rigidity on hardening. Preferred water soluble thermoplastic polymers include starch and polyvinyl alcohol (PVA) which may be used individually to form the polymeric insert, or in a blend containing both polymers or one or more other dissolvable polymers known in the art.

Preferably, the dissolvable polymeric material includes one or more biodegradable polymers. Preferred polymers are fully biodegradable as defined in the Aqueous Aerobic Biodegradation Test (Sturm test) outlined in the European standard EN13432. After the polymeric material within the polymeric insert has dissolved, the biodegradable polymers can then advantageously be decomposed by natural, biological processes. The dissolution of the polymeric material advantageously disperses the biodegradable polymers so that the polymers can be more readily biodegraded within a shorter period of time. The preferred water soluble polymers, starch and polyvinyl alcohol, are both fully biodegradable.

The dissolvable polymeric material may be combined with one or more additional, inert components for forming the polymeric insert. Preferably, the polymeric material is combined with an organic or inorganic filler material. Suitable inorganic filler materials include calcium carbonate or titanium dioxide. Alternatively or in addition, the polymeric material may be combined with tobacco material. Other additional components may include, for example, pigments, whiteners, colourants or flavourants. As discussed above, the additional components may be water soluble or water insoluble. Where the additional components are water insoluble, the components will remain as a residue after the dissolution of the polymeric material. Preferably, the additional components are therefore inert, natural or biodegradable products.

Preferably the dissolvable polymeric material has a flexural modulus of less than about 310 MPa (megapascals). Preferably the flexural modulus is no less than 20 MPa. More preferably, the dissolvable polymeric material has a flexural strain of less than about 50 MPa. Preferably the flexural strain is no less than about 10 Mpa. In order to determine the flexural modulus and flexural strain for a particular polymeric material, a sheet of the polymeric material having a length of 80 mm, a width of 10 mm and a thickness of 5 mm is formed. The sheet of material is then tested according the test procedure set out in ISO 178:2003.

Preferably, the dissolvable polymeric material has a Shore D hardness of less than about 80. Preferably the Shore D hardness is no less than about 10. In order to determine the Shore D hardness, a sheet of the polymeric material having a length of 80 mm, a width of 10 mm and a thickness of 5 mm is formed. The sheet is then tested according to the test procedure set out in ASTM D-2240.

The polymeric insert exhibits a degree of compressibility such that the polymeric insert will compress as a result of a relatively low applied force. This may result from the compressibility of the structure of the insert, the compressibility of the polymeric material, or both. Preferably, after the applied compression force has been removed, the polymeric insert will revert back towards its original size and shape.

The polymeric insert of the present invention requires a maximum compression force of less than about 100 Newtons *per* 1.5 mm compression, more preferably a force of less than about 70 Newtons *per* 1.5 mm compression and still more preferably a force of less than about 40 Newtons *per* 1.5 mm compression. Preferably, the compressibility is no less than about 5 N *per* 1.5 mm.

This degree of compressibility of the polymeric insert is advantageous since it facilitates the manufacture of filters incorporating the polymeric insert using conventional filter combining and cigarette manufacturing equipment. In particular, the compression of the polymeric insert during the process step of wrapping the filter advantageously improves the ability of a cigarette machine to manipulate the filter during wrapping.

Filters according to the invention comprising a polymeric insert as described above preferably further comprise one or more filter segments. In preferred embodiments of the invention, the filter comprises a fibrous filter segment on at least one side of the polymeric insert. For example, one or more fibrous filter segments may be provided upstream of the polymeric insert in the direction of the flow of the mainstream smoke through the filter. Alternatively or in addition, one or more fibrous filter segments may be provided downstream of the polymeric insert. Preferably, one or more fibrous filter segments are provided on both sides of the polymeric insert so that the filter includes one or more upstream fibrous filter segments and one or more downstream fibrous filter segments. Preferably, each fibrous filter segment is a plug of cellulose acetate tow or another suitable fibrous filtration material.

Preferably, the length of each of the fibrous filter segments is between about 5 mm and about 12 mm, more preferably between about 6 mm and about 8 mm. The fibres forming the fibrous filter segment may be substantially aligned in a longitudinal direction along the fibrous filter segment, or the fibres may be randomly oriented.

At least one of the additional filter segments may include at least one sorbent capable of removing at least one gas phase constituent from mainstream smoke drawn through the filter. Preferably, the at least one sorbent is selected from the group consisting of activated carbon, active aluminium, zeolites, sepiolites, molecular sieves and silica gel. Alternatively or in addition, at least one of the additional filter segments may include one or more flavourants, preferably one or more liquid flavourants, to enhance flavour delivery to the smoker during smoking.

Preferably, the polymeric insert and, when present, the one or more additional filter segments are circumscribed by a band of plug wrap. The plug wrap may be substantially air permeable or substantially air impermeable.

Preferably, the band of plug wrap is affixed to the circumferential outer surface of at least a part of the polymeric insert. Preferably, the plug wrap is affixed to the circumferential outer surface of the polymeric insert so as to establish a substantially air-tight seal at the outer surface of the polymeric insert. This advantageously prevents the leakage of the mainstream smoke around the outside of the polymeric insert, so that the mainstream smoke is instead forced through the insert. This arrangement may be particularly effective where the polymeric insert is a flow restriction element for increasing the RTD of the filter.

In preferred embodiments of the invention, the plug wrap is welded to the outer surface of the polymeric insert by means of the polymeric material forming the polymeric insert.

The term "welding" is used in the context of the present invention to indicate a seal between the polymeric insert and a surrounding wrapper that occurs as a result of bonding of the materials at the interface between the materials in the absence of an applied adhesive. The welding of the plug wrap to the surface of the polymeric insert is achieved through the wetting of the plug wrap or the wetting of the surface of the polymeric insert, or both. When the water contacts the polymeric insert, the polymeric material at the surface of the polymeric insert is at least partially dissolved. The dissolved polymeric material adheres to the inner surface of the plug wrap after the plug wrap has been wrapped around the polymeric insert. In some embodiments, the wrapped insert is then subjected to a drying process.

Where the plug wrap is formed of a paper material or other relatively porous material, the dissolved polymeric material flows into the porous structure at the surface of the plug wrap. This results in the merging or bonding or mixing of the polymeric material at the surface of the polymeric insert with the material of the plug wrap. When the dissolved polymeric material dries the surface layer of the polymeric insert solidifies and a bond is provided between the surface of the polymeric insert and the plug wrap.

In some embodiments the welding of the plug wrap to the surface of the polymeric insert provides a particularly effective, airtight seal between the plug wrap and the polymeric insert that substantially prevents the leakage of air or smoke between the polymeric insert and the plug wrap. In certain cases, the welding of the plug wrap to the outer surface of the polymeric insert may advantageously provide a seal of higher integrity than is possible with the use of a separate adhesive that is applied to the polymeric insert or the plug wrap.

The capability of the polymeric material of the polymeric insert to act as the adhesive between the polymeric insert and the plug wrap also potentially eliminates the need for an additional adhesive to be applied to the plug wrap during the production of filters according to the invention. The dissolved polymeric material may optionally also act as an adhesive to seal the plug wrap to itself along the overlapping region along the seam of the plug wrap, forming a lap joint. In certain cases, however, a longitudinal strip of adhesive may be applied to the edge of the plug wrap in order to seal the plug wrap to itself to create the lap joint.

Where the filter comprises one or more filter segments on either side of the polymeric insert, the plug wrap is preferably affixed to at least a portion of the outer circumferential surfaces of the filter segments. Preferably, a suitable adhesive is applied to the inner surface of the plug wrap in order to adhere the plug wrap to the outer circumferential surface of the filter segments. The adhesive may be applied continuously or intermittently to the inner surface of the plug wrap. The adhesive may be applied to the plug wrap in spaced apart strips which extend at least part way around the filter and secure the filter segments to the plug wrap. The strips of adhesive may be evenly spaced apart along the length of the sheet of plug wrap. The position of the strips of adhesive may be registered in order to correspond to the positions of the filter segments within the filter. The adhesive may also be disposed in longitudinal strips that are either continuous along the plug wrap or intermittent. In any case, the adhesive may be placed on the plug wrap such that there is no adhesive, or substantially no adhesive, on the portion of the plug wrap corresponding to the insert.

The plug wrap of filters according to the invention is preferably formed of a paper material. The plug wrap may have a basis weight between about 40 grams *per* square meter and about 130 grams *per* square meter. More particularly, the plug wrap may have a relatively low basis weight between about 40 grams *per* square meter and about 60 grams *per* square meter, or a relatively high basis weight between about 60 grams *per* square meter and about 130 grams *per* square meter.

However, the plug wrap may alternatively be formed of a plastics material, for example, a transparent plastics material. The basis weight of the plastics materials may be between about 40 grams *per* square meter and about 70 grams *per* square meter, and the plastics material may have a thickness between about 25 microns and about 50 microns. In some embodiments, the plug wrap may be substantially non-porous, for example having a porosity of less than about 20 Coresta units, more preferably less than about 10 Coresta units. In other embodiments, the plug wrap may be porous, for example having a porosity of greater than about 20 Coresta units, more preferably greater than about 100 Coresta units, and most preferably greater than about 1000 Coresta units.

Smoking articles according to the invention preferably comprise a rod of smokable material and a filter incorporating the polymeric insert as described above. Preferably, the rod of smokable material comprises tobacco circumscribed by a wrapper, more preferably, tobacco cut filler circumscribed by a wrapper.

In smoking articles according to the invention, the filter including the polymeric insert is preferably attached to the rod of smokable material by a band of substantially impermeable tipping paper. A ventilation zone comprising one or more circumferential rows of perforations is preferably provided at a position along the filter. Where the plug wrap is substantially air impermeable, as well as being provided in the tipping paper, the perforations are preferably provided through the underlying plug wrap. Where the plug wrap is substantially air permeable, the perforations are preferably provided in the tipping paper and may optionally be provided in the underlying plug wrap. The resistance to draw (RTD) of filters and smoking articles according to the invention may be adjusted by varying the level and position of ventilation provided at the ventilation zone as well as the porosity of the plug wrap.

The ventilation zone may be provided upstream of all or a part of the polymeric insert within the filter. Alternatively or in addition, the ventilation zone may be provided downstream of all of a part of the polymeric insert. The ventilation zone may be upstream or downstream of the transverse barrier, for example along the polymeric insert upstream or downstream of the transverse barrier. Where the polymeric insert comprises one or more tubular portions at least partially defining a cavity, the ventilation zone may overlie one of the tubular portions and provision be made, for example by one or more gaps or holes through the insert, for air to pass from the ventilation zone into the cavity. This enables mixing of the mainstream smoke with the air entering through the ventilation zone within the cavity formed by the tubular portion.

In particularly preferred embodiments including two integral tubular portions downstream of the transverse barrier, the ventilation zone preferably overlies the first tubular portion adjacent the transverse barrier. The first tubular portion preferably has a reduced external diameter compared to the overall diameter of the filter in order to provide an annular chamber around the tubular portion into which the ventilation air is drawn during smoking.

Preferably, filters according to the present invention have an overall RTD of between about 250 mm WG (water gauge) and about 500 mm WG, more preferably between about 275 mm WG and about 400 mm WG, most preferably between about 300 mm WG and about 400 mm WG, wherein the RTD is measured with all ventilation blocked. Preferably, smoking articles according to the invention have an overall RTD of at least about 30 mm WG, more preferably at least about 40 mm WG, wherein the RTD is measured prior to smoking with all ventilation blocked.

The RTD of a filter or smoking article is expressed herein with the units of pressure 'mm WG' or `mm of water gauge' and is measured in accordance with ISO 6565:2002.

Preferably, the overall length of smoking articles according to the present invention is between about 70 mm and about 128 mm, more preferably about 84 mm.

Preferably, the external diameter of filters and smoking articles according to the present invention is between about 5 mm and 8.5 mm, more preferably about 7.9 mm.

Preferably, the overall length of filters according to the present invention is between about 18 mm and about 36 mm, more preferably about 27 mm.

Polymeric inserts as described above may advantageously be incorporated into a wide variety of different types of smoking article. For example, the polymeric inserts may be incorporated into combustible smoking articles, such as filter cigarettes, having a rod of tobacco cut filler or other smokable material, which is combusted during smoking.

Alternatively, the polymeric inserts may be incorporated into heated smoking articles of the type described above in which material is heated to form an aerosol, rather than combusted. For example, polymeric inserts according to the present invention may be incorporated into a heated smoking article comprising a combustible heat source, such as that disclosed in WO-A-2009/022232, which comprises a combustible heat source and an aerosol-generating substrate downstream of the combustible heat source. Polymeric inserts according to the present invention may also be incorporated into heated smoking articles comprising non-combustible heat sources, for example, chemical heat sources or electrical heat sources such as electrical resistive heating elements.

Alternatively, polymeric inserts as described above may be incorporated into smoking articles in which a nicotine-containing aerosol is formed from a tobacco material or other nicotine source without combustion and without heating, such as those described in WO-A-2008/121610 and WO-A-2010/107613.

Smoking articles according to the present invention may be packaged in containers, for example in soft packs or hinge-lid packs, with an inner liner coated with one or more flavourants.

According to the invention there is further provided a method for forming a filter according to the invention, as described above. The method comprises the steps of: providing a water soluble polymeric insert having a compressibility of less than 100 N *per* 1.5 mm formed of a water soluble polymeric material comprising one or more water soluble polymers; providing a filter wrapper; wetting at least one of the polymeric insert and the filter wrapper through the application of water; and wrapping the filter wrapper around the filter and into contact with the polymeric insert. The water at least partially dissolves the polymer material at the outer surface of the polymeric insert and the dissolved polymeric material adheres the filter wrapper to the outer surface of the polymeric insert.

The filter produced by the method according to the invention includes a filter wrapper that is fused to the outer surface of the polymeric insert by means of the polymeric material forming the insert, which in some embodiments provides an airtight seal between the plug wrap and the polymeric insert, as described above. Preferably, the filter wrapper applied to the filter is a plug wrap, as discussed above.

In preferred methods of the present invention the filters including the polymeric insert are formed continuously. A continuous array of the filters including the polymeric inserts and any additional filter segments is provided and the continuous array of filters is wrapped in a continuous sheet of the filter wrapper. The continuous wrapped filter rod is then preferably cut to form individual filters, or filter rods that have all of the components for two (double) or four (quadruple) filters, which are subsequently combined with wrapped tobacco rods in a known process to provide assembled smoking articles.

Where the method is used to form filters including polymeric inserts in combination with one or more additional filter segments, such as fibrous filter segments, the polymeric inserts and the filter segments are preferably aligned and arranged in the appropriate order in the continuous array of filters. This step can advantageously be carried out using conventional filter making apparatus and techniques.

Where the polymeric insert is asymmetric along its length, it may be necessary to alternate the direction of the polymeric insert so that the correct direction is achieved in all of the produced filters. For example, it may be necessary to alternate the direction of successive polymeric inserts where the process forms double or quadruple filter rods, which are combined with a wrapped tobacco rod at each end before being cut to form two smoking articles. In alternative processes, it may be possible to arrange successive inserts so that they all face in the same direction.

The wetting of the outer surface of the polymeric insert to at least partially dissolve the polymeric material at the surface may be carried out by applying water directly to the outer surfaces of the polymeric insert, for example, by spraying or dipping the polymeric inserts before the filter wrapper is applied. Alternatively or in addition, the surface of the polymeric insert may be indirectly wetted by applying water to the inner surface of the filter wrapper that will come into contact with the polymeric insert. The wetting of the filter wrapper may be carried out using any suitable technique including but not limited to dipping, spraying, rolling or printing, for example, with a gravure printing roller. The surface of the filter wrapper may be wetted continuously over the entire surface, or the water may be applied at specific locations to coincide with the position of the polymeric insert within the filter.

The filter wrapper is preferably wrapped around the polymeric insert after the application of the water to at least one of the polymeric insert and the filter wrapper so that the water dissolves the polymeric material at the surface of the polymeric insert as the filter wrapper is brought into contact with the polymeric insert. The dissolved polymeric material acts as the adhesive to affix the filter wrapper to the outer surface of the polymeric insert. As the filter wrapper is wrapped around the polymeric insert, the dissolved polymeric material is spread across the surface of the polymeric insert and penetrates the surface layer of the filter wrapper.

Alternatively or in addition, water may be applied to the wrapper and the outer surface of the polymeric insert after the filter wrapper is wrapped around the polymeric insert.

The dissolved polymeric material dries and solidifies again as the water escapes from surface of the polymeric insert to form the bond between the filter wrapper and the polymeric insert. The amount of water required to achieve the necessary welding of the filter wrapper to the surface of the polymeric insert is relatively small and the drying may occur of its own accord during the subsequent processing of the assembled filters. Alternatively, if desired, the method of the present invention may further comprise a drying step wherein the drying of the polymeric material is accelerated through the application of one or more of heat, air or vacuum.

Preferably, prior to the wrapping of the filter wrapper around the filter, a strip of adhesive is applied to the inner surface along an edge of the filter wrapper. The adhesive is applied to the edge that overlaps with the opposed edge of the filter wrapper along the seam of the filter wrapper. This additional seal is provided in order to secure the filter wrapper to itself so that the free edge of the wrapper along the seam remains flat against the filter and does not protrude from the surface.

Where the filter includes one or more additional filter segments, additional adhesive may also be applied to the filter wrapper in longitudinal strips or across the entire width of the filter wrapper in order to secure the filter wrapper in place around the filter segments and ensure that the additional filter segments do not slide within the filter wrapper, as described above. The adhesive may be applied selectively to areas of the filter wrapper corresponding to the additional filter segments, or the adhesive may be applied continuously along the filter wrapper. Alternatively or in addition, adhesive may be applied to the surface of the filter segments.

The invention will be further described, by way of example only, with reference to the accompanying drawings, in which:
Figure 1 shows a perspective view of a smoking article according to the present invention, with the tipping paper and filter plug wrap partially unwrapped to reveal the internal components of the filter;
Figure 2 shows a longitudinal cross section of the filter of the smoking article of Figure 1; and
Figure 3 shows a longitudinal cross section of a filter according to an alternative embodiment of the present invention.

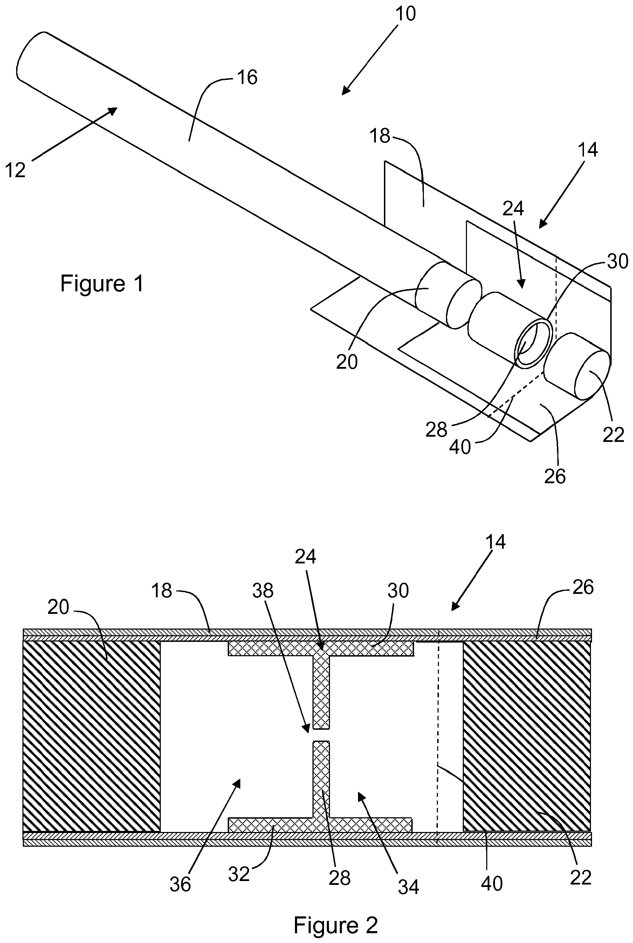

The smoking article 10 shown in Figure 1 comprises a cylindrical tobacco rod 12 and a filter 14. The tobacco rod 12 comprises a plug of tobacco cut filler circumscribed by a paper wrapper 16. The filter 14 is attached to the tobacco rod 12 by a band of tipping paper 18, which circumscribes the filter 14 and an adjacent portion of the tobacco rod 12.

The filter 14 comprises a first filter segment 20 adjacent to and abutting the tobacco rod 12, a second filter segment 22 at the mouth end of the smoking article 10 and a water soluble polymeric insert in the form of a one piece, injection moulded flow restriction element 24 disposed between the first 20 and second 22 filter segments. The first 20 and second 22 filter segments are each formed of a plug of cellulose acetate tow. The first 20 and second 22 filter segments are spaced apart from the opposed ends of the flow restriction element 24 by a small distance. The first 20 and second 22 filter segments and the flow restriction element 24 are circumscribed by a band of plug wrap 26.

The flow restriction element 24 is formed of polyvinyl alcohol which has been blended with an inorganic filler material and injection moulded to form the flow restriction element 24. As shown in Figure 2, the flow restriction element 24 includes a central, transverse barrier 28, an integral downstream tubular portion 30 extending from the downstream side of the barrier 28 and an integral upstream tubular portion 32 extending from the upstream side of the barrier 28.

The inner periphery of the downstream tubular portion 30 defines a downstream cavity 34 adjacent the transverse barrier 28, wherein the downstream cavity 34 is integral to the space between the transverse barrier 28 and the second filter segment 22. The inner periphery of the upstream tubular portion 32 similarly defines an upstream cavity 36 adjacent the transverse barrier 28 on the opposite side, wherein the downstream cavity 34 is integral to the space between the transverse barrier 28 and the first filter segment 20. The tubular portions 30, 32 are of approximately the same length as each other and both have an external diameter substantially corresponding to the outer diameter of the filter 14. The flow restriction element 24 is therefore substantially symmetrical about the transverse barrier 28.

The transverse barrier 28 is in the form of a circular disc having an outer diameter substantially corresponding to the outer diameter of the filter 14. The circular disc includes a single, central orifice 38 that provides a passageway between the downstream cavity 34 and the upstream cavity 36. As shown in Figure 1, the outer circumferential edges of the transverse barrier 28, the downstream tubular portion 30 and the upstream tubular portion 32 are integral such that the outer surface of the flow restriction element 24 as a whole is substantially cylindrical. The transverse barrier 28 and the walls of the tubular portions 30, 21 have a thickness of between 0.5 mm and 0.7 mm.

The plug wrap 26 is fused to the outer surface of the flow restriction element 24 by means of the polyvinyl alcohol at the surface of the flow restriction element 24. As described above, the fusing of the plug wrap 26 to the outer surface of the flow restriction element 24 is achieved through the wetting of the surface of the flow restriction element 24 in order to at least partially dissolve the polyvinyl alcohol at the surface. The plug wrap 16 is affixed to the outer surfaces of the first 20 and second 22 filter segments by means of a suitable adhesive. A strip of adhesive is also provided along the inner surface at the edge of the plug wrap 16 in order to secure the plug wrap 16 in place along the seam, creating a lap joint.

A circumferential row of perforations 40 is provided through the band of tipping paper 18 and the band of plug wrap 26. The perforations 40 are located at a position along the filter 14 overlying the space between the flow restriction element 24 and the second filter segment 22. In use, ventilating air is drawn through the perforations 40 into the space in the filter between the flow restriction element 24 and the second filter segment 22 where it mixes with mainstream smoke drawn through the central orifice 38 of the transverse barrier 28.

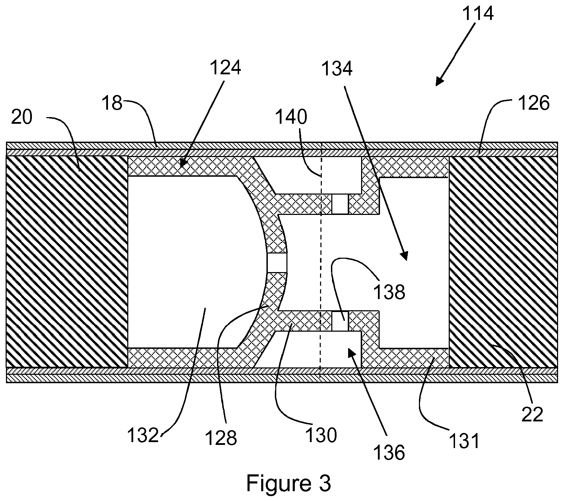

The filter 114 shown in Figure 3 is similar in construction to the filter 14 described above but incorporates as the water soluble polymeric insert an alternative flow restriction element 124 between the first 20 and second 22 filter segments. The flow restriction element 124 comprises a central, transverse barrier 128 as described above, a first integral downstream tubular portion 130, a second integral downstream tubular portion 131 and an upstream integral tubular portion 132. The transverse barrier 128 is concave in the downstream direction.

The first downstream tubular portion 130 extends from the downstream side of the transverse barrier 128 and has a reduced external diameter compared to the overall diameter of the filter. The second downstream tubular portion 131 extends from the downstream end of the first downstream tubular portion 130 and abuts the first filter segment 20. The upstream tubular portion 132 extends from the upstream side of the transverse barrier 128 and abuts the second filter segment 22. Both the second downstream tubular portion 131 and the upstream tubular portion 133 have an external diameter which is substantially the same as the diameter of the filter 114.

Due to the reduced external diameter of the first downstream tubular portion 130 compared to the tubular portions on either side, the inner surface of the plug wrap 126 is spaced apart from the circumferential outer surface of the first downstream tubular portion 130, as shown in Figure 3. The annular space 136 between the plug wrap 126 and the outer surface of the first downstream tubular portion 130 forms a ventilation chamber. One or more circumferential rows of perforations 140 are provided through the plug wrap 126 and tipping paper 18 overlying the ventilation chamber 136. Apertures 138 through the wall of the first downstream tubular portion 130 of the flow restriction element allow ventilation to be drawn through the perforations 140 and the ventilation chamber 136 into the downstream cavity 134 defined by the first 130 and second 131 downstream tubular portions, where it can mix with mainstream smoke.

The filters 14,114 are constructed using the method described above. A continuous array of the first 20 and second 22 filter segments with the flow restriction element 24,124 arranged in between is first provided. A continuous sheet of plug wrap material is also provided and the internal surface of the plug wrap is coated with water using a gravure roller in a conventional printing process. The wetted sheet of plug wrap is wrapped around the array of filter segments and glued along a longitudinal seam. The continuous wrapped filter rod is then cut to provide individual, double or quadruple wrapped filters and the wrapped filters are combined with a wrapped tobacco rod and attached to the tobacco rod by affixing the band of tipping paper around the filter. This step may be carried out using existing machinery employed for attaching filters to tobacco rods during the manufacture of known filter cigarettes.

After smoking, the filter 14,114 and any remaining part of the tobacco rod will typically be discarded. Upon exposure of the filter 14,114 to water, the water will cause the polyvinyl alcohol forming the flow restriction element 24,124 to begin to dissolve so that the structure of the flow restriction element 24,124 breaks down. Eventually, the polyvinyl alcohol within the flow restriction element 24,124 will dissolve fully and the dissolved polyvinyl alcohol will move away from the filter 14,114 and be gradually biodegraded. After the flow restriction element 24,124 has dissolved, the plug wrap 26,126 and the tipping paper 18 will collapse inwardly and the remainder of the filter 14,114 will gradually degrade both from the inside and the outside. As described above, the dissolution of the flow restriction element 24,124 increases the rate at which the filter as a whole will break down.

## Claims

1. A smoking article (10) including a filter (14) (114) comprising a polymeric insert (24) (124) having walls, the thickness of the walls being between 0.2 mm and 2.0 mm, the insert (24) (124) having a compressibility of less than 100 N *per* 1.5 mm and being formed of a water soluble polymeric material comprising one or more water soluble polymers,
wherein the filter (14) (114) is circumscribed by a filter wrapper (26) (126) and wherein the filter wrapper (26) (126) is fused to the outer surface of the polymeric insert (24) (124) by means of the polymeric material forming the polymeric insert (24) (124).

2. A smoking article (10) according to claim 1 wherein the polymeric insert (24) (124) comprises one or more tubular portions (30) (32) (130, 131) (132) defining one or more cavities (34) (36) (134) (136).

3. A smoking article (10) according to claim 1 or 2 wherein the polymeric insert (24) (124) is a flow restriction element (24) (124) comprising at least one transverse barrier having at least one orifice therein.

4. A smoking article (10) according to any of any preceding claim wherein the water soluble polymeric material of the polymeric insert (24) (124) comprises one or more water soluble, biodegradable polymers.

5. A smoking article (10) according to any preceding claim wherein the water soluble polymeric material of the polymeric insert (24) (124) comprises at least one of starch and polyvinvyl alcohol.

6. A smoking article (10) according to any preceding claim wherein the polymeric insert (24) (124) incorporates a flavourant material.

7. A smoking article (10) according to any preceding claims wherein the polymeric insert (24) (124) has a flexural modulus of less than 310 MPa.

8. A smoking article (10) according to any preceding claim wherein the polymeric insert (24) (124) forms at least a part of a container and wherein the container holds a flavourant material.

9. A smoking (10) article according to any preceding claim wherein the filter further comprises a plug (20) of filtration material upstream of the polymeric insert.

10. A smoking article (10) according to claim 9 in which the filter (14) (14) comprises a plug (20, 22) of filtration material both upstream and downstream of the polymeric insert.

11. A method for forming a filter (10) for a smoking article, the method comprising the steps of:
providing a water soluble polymeric insert (24) (124) having a compressibility of less than 100 N *per* 1.5 mm formed of a water soluble polymeric material comprising one or more water soluble polymers;
providing a filter wrapper (26) (126);
wetting at least one of the polymeric insert (24) (124) and the filter wrapper (26) (126) through the application of water; and
wrapping the filter wrapper (26) (126) around the filter (14) (114) and into contact with the polymeric insert (24) (124) wherein the applied water at least partially dissolves the polymeric material at the outer surface of the polymeric insert and wherein the dissolved polymeric material adheres the filter wrapper to the outer surface of the polymeric insert.

## Patentansprüche

1. Rauchartikel (10) beinhaltend einen Filter (14) (114), umfassend einen Wände aufweisenden Polymereinsatz (24) (124), wobei die Dicke der Wände zwischen 0,2 mm und 2,0 mm liegt, der Einsatz (24) (124) eine Kompressibilität von weniger als 100 N *pro* 1,5 mm aufweist und aus einem wasserlöslichen Polymermaterial gebildet ist, das ein oder mehrere wasserlösliche Polymere umfasst,
wobei der Filter (14) (114) von einer Filterumhüllung (26) (126) umhüllt ist und wobei die Filterumhüllung (26) (126) an der Außenfläche des Polymereinsatzes (24) (124) mittels des den Polymereinsatz (24) (124) bildenden Polymermaterials angeschmolzen ist.

2. Rauchartikel (10) nach Anspruch 1, wobei der Polymereinsatz (24) (124) einen oder mehrere rohrförmige Abschnitte (30) (32) (130, 131) (132) umfasst, die einen oder mehrere Hohlräume (34) (36) (134) (136) definieren.

3. Rauchartikel (10) nach Anspruch 1 oder 2, wobei der Polymereinsatz (24) (124) ein Durchflussbegrenzungselement (24) (124) ist, das wenigstens eine quer verlaufende Sperre mit wenigstens einer Öffnung darin aufweist.

4. Rauchartikel (10) nach einem beliebigen der vorhergehenden Ansprüche, wobei das wasserlösliche Polymermaterial des Polymereinsatzes (24) (124) ein oder mehrere wasserlösliche, biologisch abbaubare Polymere aufweist.

5. Rauchartikel (10) nach einem beliebigen vorhergehenden Anspruch, wobei das wasserlösliche Polymermaterial des Polymereinsatzes (24) (124) wenigstens eines von Stärke und Polyvinylalkohol aufweist.

6. Rauchartikel (10) nach einem beliebigen vorhergehenden Anspruch, wobei der Polymereinsatz (24) (124) einen Geschmacksstoff beinhaltet.

7. Rauchartikel (10) nach einem beliebigen der vorhergehenden Ansprüche, wobei der Polymereinsatz (24) (124) einen Biegemodul von weniger als 310 MPa aufweist.

8. Rauchartikel (10) nach einem beliebigen vorhergehenden Anspruch, wobei der Polymereinsatz (24) (124) wenigstens einen Teil eines Behälters bildet und wobei der Behälter ein Geschmacksmaterial enthält.

9. Rauchartikel (10) nach einem beliebigen vorhergehenden Anspruch, wobei der Filter ferner einen dem Polymereinsatz vorgelagerten Einsatz (20) aus Filtrationsmaterial aufweist.

10. Rauchartikel (10) nach Anspruch 9, wobei der Filter (14) (14) einen dem Polymereinsatz sowohl vorgelagerten als auch nachgelagerten Einsatz (20, 22) aus Filtrationsmaterial aufweist.

11. Verfahren zum Bilden eines Filters (10) für einen Rauchartikel, das Verfahren umfassend die folgenden Schritte:
Vorsehen eines wasserlöslichen Polymereinsatzes (24) (124) mit einer Kompressibilität von weniger als 100 N *pro* 1,5 mm, der aus einem wasserlöslichen Polymermaterial gebildet ist, das ein oder mehrere wasserlösliche Polymere umfasst;
Vorsehen einer Filterumhüllung (26) (126);
Befeuchten von wenigstens einem von dem Polymereinsatz (24) (124) und der Filterumhüllung (26) (126) durch die Anwendung von Wasser; und
Umwickeln der Filterumhüllung (26) (126) um den Filter (14) (114) und in Kontakt mit dem Polymereinsatz (24) (124), wobei das aufgebrachte Wasser wenigstens teilweise das Polymermaterial an der Außenfläche des Polymereinsatzes auflöst und wobei das aufgelöste Polymermaterial die Filterumhüllung an der Außenfläche des Polymereinsatzes anhaftet.

## Revendications

1. Article à fumer (10) comportant un filtre (14) (114) comprenant un insert polymère (24) (124) ayant des parois, l'épaisseur des parois étant entre 0,2 mm et 2,0 mm, l'insert (24) (124) ayant une compressibilité inférieure à 100 N *par* 1,5 mm et étant formé d'un matériau polymère soluble dans l'eau comprenant un ou plusieurs polymères solubles dans l'eau,
dans lequel le filtre (14) (114) est entouré par une enveloppe de filtre (26) (126) et dans lequel l'enveloppe de filtre (26) (126) est fusionnée à la surface extérieure de l'insert polymère (24) (124) au moyen du matériau polymère formant l'insert polymère (24) (124).

2. Article à fumer (10) selon la revendication 1, dans lequel l'insert polymère (24) (124) comprend une ou plusieurs parties tubulaires (30) (32) (130, 131) (132) définissant une ou plusieurs cavités (34) (36) (134) (136).

3. Article à fumer (10) selon la revendication 1 ou 2, dans lequel l'insert polymère (24) (124) est un élément de restriction d'écoulement (24) (124) comprenant au moins une barrière transversale ayant au moins un orifice dans celle-ci.

4. Article à fumer (10) selon l'une quelconque des revendications précédentes, dans lequel le matériau polymère soluble dans l'eau de l'insert polymère (24) (124) comprend un ou plusieurs polymères biodégradables solubles dans l'eau.

5. Article à fumer (10) selon l'une quelconque des revendications précédentes, dans lequel le matériau polymère soluble dans l'eau de l'insert polymère (24) (124) comprend au moins l'un parmi de l'amidon et de l'alcool polyvinylique.

6. Article à fumer (10) selon l'une quelconque des revendications précédentes, dans lequel l'insert polymère (24) (124) incorpore un matériau aromatisant.

7. Article à fumer (10) selon l'une quelconque des revendications précédentes, dans lequel l'insert polymère (24) (124) a un module en flexion inférieur à 310 MPa.

8. Article à fumer (10) selon l'une quelconque des revendications précédentes, dans lequel l'insert polymère (24) (124) forme au moins une partie d'un récipient et dans lequel le récipient contient un matériau aromatisant.

9. Article à fumer (10) selon l'une quelconque des revendications précédentes, dans lequel le filtre comprend en outre un bout-filtre (20) de matériau de filtration en amont de l'insert polymère.

10. Article à fumer (10) selon la revendication 9, dans lequel le filtre (14) (14) comprend un bout-filtre (20, 22) de matériau de filtration à la fois en amont et en aval de l'insert polymère.

11. Procédé de formation d'un filtre (10) pour un article à fumer, le procédé comprenant les étapes de :
fourniture d'un insert polymère soluble dans l'eau (24) (124) ayant une compressibilité inférieure à 100 N *par* 1,5 mm formé d'un matériau polymère soluble dans l'eau comprenant un ou plusieurs polymères solubles dans l'eau ;
fourniture d'une enveloppe de filtre (26) (126) ;
mouillage d'au moins un élément parmi l'insert polymère (24) (124) et l'enveloppe de filtre (26) (126) par l'application d'eau ; et
enveloppement de l'enveloppe de filtre (26) (126) autour du filtre (14) (114) et en contact avec l'insert polymère (24) (124), dans lequel l'eau appliquée dissout au moins partiellement le matériau polymère au niveau de la surface extérieure de l'insert polymère et dans lequel le matériau polymère dissous fait adhérer l'enveloppe de filtre à la surface extérieure de l'insert polymère.
